# EUROPEAN PATENT SPECIFICATION

(11) **EP 0 979 070 B1**
(45) Date of publication and mention of the grant of the patent: **11.06.2003**
(21) Application number: 98910219.9
(22) Date of filing: 06.03.1998
(51) Int. Cl.: A61K 9/50

(54) **ADHERENT MICROCAPSULES CONTAINING BIOLOGICALLY ACTIVE INGREDIENTS**
HAFTENDE MIKROKAPSELN ENTHALTEND BIOLOGISCH AKTIVE SUBSTANZEN
MICROCAPSULES ADHERENTES RENFERMANT DES INGREDIENTS BIOLOGIQUEMENT ACTIFS

(30) Priority: 07.04.1997 US 834971
(43) Date of publication of application: 16.02.2000
(73) Proprietor: MINNESOTA MINING AND MANUFACTURING COMPANY, St. Paul, Minnesota 55133-3427 (US)
(72) Inventor: SENGUPTA, Ashok, Saint Paul, MN 55133-3427 (US); NIELSEN, Kent, E., Saint Paul, MN 55133-3427 (US); BARINSHTEYN, Galina, Saint Paul, MN 55133-3427 (US); LI, Kai, Saint Paul, MN 55133-3427 (US); BANOVETZ, John, Saint Paul, MN 55133-3427 (US)
(74) Representative: VOSSIUS & PARTNER
(86) International application number: PCT/US98/04462
(87) International publication number: WO 98/044912

(56) References cited:
- EP-A- 0 371 635
- WO-A-92/13924
- US-A- 3 691 140
- US-A- 4 563 212

## Description

The present invention relates to suspensions of adherent microcapsules containing biologically active ingredients.

It is known to encapsulate various materials, often by interfacial polycondensation. For instance, United States Patent No. 3,577,515 speaks of capsules containing dyes, inks, chemical reagents, pharmaceuticals, flavoring material, pesticides, herbicides, peroxides and indeed anything which can be dissolved, suspended or otherwise constituted in or as a liquid enclosed by the capsule. United Kingdom Patent No. 1,371,179 discloses the preparation of polyurea capsules for containing dyes, inks, chemical reagents, pharmaceuticals, flavoring materials, fungicides, bactericides and pesticides such as herbicides and insecticides. United States Patents Nos. 4,046,741; 4,140,516; 4,417,916; 4,563,212 and European Patent No. 611,253 are concerned with encapsulation of various materials. Canadian Patent No. 1,044,134 is concerned with encapsulation of insecticides, particularly pyrethroids. Canadian Patent No. 1,179,682 is concerned with encapsulation of pheromones. A pending United States Patent Application (attorney docket number 53319USA6A), filed on even date with this application, is also concerned with encapsulating various materials, including biologically active materials such as pheromones.

The above-mentioned patents make use of various forms of interfacial polycondensation, particularly the formation of capsules having polyurea and/or polyurethane/polyurea shell walls. The capsules made by the various processes are said to range in diameter from about 1 micron to about 2 mm, but most fall towards the lower end of this range, i.e., from about 250 microns, or even 100 microns, down to about 1 micron.

The present invention relates to an aqueous suspension of microcapsules containing a biologically active material, which suspension further comprises an adhesive material in an amount effective to enable said microcapsules to adhere to an intended substrate, wherein the adhesive material is in the form of an aqueous suspension of adhesive microspheres.

For purposes of the present invention, the term "biologically active" means materials that affect the life processes of organisms. Materials that are biologically active include herbicides, pesticides, pharmaceuticals, and semiochemicals, including naturally and artificially produced pheromones.

Microcapsules containing such biologically active ingredients and additionally containing an adhesive material advantageously may be applied by spraying. This is particularly advantageous in the fields of forestry, agriculture and horticulture, where aerial spraying is preferred as a means of application. The sprayed capsules are applied to foliage, to which continued contact is desired. For instance, insecticides and pheromones should remain on the foliage if they are to display maximum effect. In the absence of the adhesive material described herein, the microcapsules may be blown or washed off of the foliage by wind and rain. It is necessary that any treatment to render the capsules adherent should not be at the expense of other valuable properties. For instance, for spraying for use in forestry, agriculture or horticulture the capsules are ideally discrete particles that will remain in suspension in water, usually with a suspending agent. Adherent properties imparted to the capsules should not have the result that the capsules aggregate together in aqueous suspension. Such aggregation would of course render the capsules unsuitable for spraying and defeat the whole purpose of the capsules. Furthermore, any material used to impart adherent properties should not affect the integrity of the particles; it should not dissolve or weaken the shell of the capsule.

The present compositions are aqueous suspensions, which provides a significant advantage in use. Other compositions that deliver encapsulated insecticides and herbicides are solvent based, which is a significant disadvantage because such solutions release volatile organic compounds (VOCs) to the environment For purposes of the present invention, a volatile organic compound (VOC) is any volatile organic material having a vapor pressure at 20°C greater than 13 Pa (0.1 Torr (mm Hg)) that is not an active ingredient (e.g. an insecticide, herbicide or the like). More preferably, Volatile Organic Compounds may be defined as having a vapor pressure at 20°C greater than 2.7 Pa (0.02 Torr) that is not an active ingredient Because aqueous suspensions of the present invention need not contain any appreciable amount of these undesirable VOCs, the overall composition is significantly more environmentally friendly. Preferred compositions of the present invention contain no more than 5% VOC by weight, and most preferably contain no more than 2% VOC by weight Jurisdictions such as Los Angeles and so forth that have a significant air pollution problem would find the present aqueous suspensions to be highly preferred due to their low pollution effect on the environment.

While adhesive materials are sometimes used in agriculture today to help herbicides and insecticides stick to organic substrates, until now the latex has been used to a limited extent only with unencapsulated chemicals. Surprisingly, it has been found that incorporation of adhesive with microencapsulated biologically active materials results in a composition that is still sprayable from a conventional spraying apparatus. Contrary to expectations, it has been found that the sticky microcapsules of the instant composition do not agglomerate at the spray orifice or in the storage vessel. During application, the adhesive latex associates with the microcapsules and therefore does not entirely coat the surface of the target substrates. Because the adhesive is soluble or dispersible in water, the composition has a limited but effective lifetime on the target substrate before weather eventually removes the material from the substrate.

The adhesive latex used in the present composition may be any suitable water-dispersible adhesive available in the art. In the agricultural business, such latex compositions are often called stickers or spreaders. Stickers are used to help non-encapsulated agriculture chemicals adhere to plants. Spreaders are used to help disperse non-encapsulated agriculture chemicals on application. Preferred adhesives are acrylate-based adhesives. One suitable latex is available from Rohm & Haas under the trade-mark Companion. Another is available from Deerpoint Industries under the trade-mark DPI S-100 (a proprietary sticker/spreader). Examples of such adhesives are polymers made from the "soft" monomers such as n-butyl acrylate, isooctyl acrylate, or the like, or copolymers made from a soft component, such as isobutylene, n-butyl acrylate, isooctyl acrylate, ethyl hexyl acrylate, or the like; and a polar monomer such as acrylic acid, acrylonitrile; acrylamide, methacrylic acid, methyl methacrylate or the like. Non-spherical polyacrylate adhesives are commercially available, for example, as the Rohm and Haas RhoplexTM line of adhesives. Preferably, the non-spherical polyacrylate adhesive is present in an amount of about 10-35% by weight of the total suspension.

It further has surprisingly been found that tacky microspheres of adhesive may be used to adhere biologically active material containing microcapsules to an intended substrate. The tacky microspheres have sufficient adhesive properties to provide the desired adhesive function, and there is no danger of completely coating the microcapsule and possibly inhibiting the release characteristics of the capsule. Surprisingly, the combination of biologically active material containing microcapsules and tacky microspheres may be applied without the need to modify the orifices of conventional sprayers with minimal clogging or plugging problems.

Preferably, the adhesive material is an acrylate- or methacrylate-based adhesive system comprising infusible, solvent dispersible, solvent insoluble, inherently tacky, elastomeric copolymer microspheres as disclosed in U.S. Pat. No. 3,691,140. Alternatively, this adhesive composition may comprise hollow, polymer, acrylate, infusible, inherently tacky, solvent insoluble, solvent dispersible, elastomeric pressure-sensitive adhesive microspheres as disclosed in U.S. Pat. No. 5,045,569. Other suitable adhesives are the tacky microspheres having pendant hydrophilic polymeric or oligomeric moieties that are disclosed in U.S. Pat. No. 5,508,313.

Alternatively, the adhesive comprises between about 60-100% by weight of hollow, polymeric, acrylate, inherently tacky, infusible, solvent-insoluble, solvent-dispersible, elastomeric pressure-sensitive adhesive microspheres having a diameter of at least 1 micrometer, and between about 0-40% by weight of a non-spherical polyacrylate adhesive. The hollow microspheres are made in accordance with the teaching of European Patent Application 371,635.

Biologically active materials are preferably selected from pharmaceuticals, fungicides, bactericides and pesticides such as herbicides and insecticides. Particularly preferred biologically active materials are the pyrethroids, pheromones ' and other such semiochemicals, whether naturally produced or artificially synthesized.

The microcapsules may be any of the microcapsules suitable for encapsulating biologically active materials, including polyurea, polyurethane, melamine/urea, gelatin microcapsules or the like. The microcapsules containing the biologically active material preferably are provided in a size in the range of from 1 micron to 2 mm.

Also provided is a process for preparing an aqueous suspension of adherent microcapsules. It has surprisingly been discovered that careful mixing of the ingredients of compositions of the present invention under basic conditions can be particularly beneficial for avoiding the formation of a coagulum that would be impossible to apply using conventional spraying equipment. The process comprises admixing A) an aqueous suspension of microcapsules having a pH either greater than or less than 7 with B) an aqueous suspension of adhesive microspheres having a pH either greater than or less than 7, such that the pH of A) and B) are both greater than 7 or less than 7. The adhesive suspension is selected from the group consisting of adherent microspheres, or a combination of adherent microspheres and non-spherical aqueous latex adhesive. Most preferably, the mixing takes place at a pH between about 8 and about 9. Any base can be used to control the pH, for example alkali metal or alkaline earth metal hydroxides or carbonates, but the simplest and preferred is ammonia in aqueous solution.

Typically, the aqueous suspension A) of microcapsules of the present invention may contain from about 5 to 40 percent microcapsules by weight, and preferably from about 5 to 25 percent microcapsules by weight before mixing with the adhesive composition. Typically, the aqueous suspension B) of adhesive microspheres may contain from about 5 to 60 percent of the adhesive by weight, preferably about 25 to 40 percent of the adhesive by weight before mixing with the microcapsule composition A). Suitably about 10 to 30 parts by weight of aqueous suspension of adhesive microspheres (composition B) is added to about 90 to 70 parts by weight of aqueous suspension of microcapsules (composition A), to form a suspension of the invention.

The aqueous suspension of the microcapsules and the aqueous suspension of the adhesive microspheres should be admixed slowly and carefully, with stirring, to avoid breaking the suspension. The admixture is suitably done at room temperature.

As noted above, the compositions of the present invention are specially suited to be delivered to an intended substrate in an easy and economic manner. Specifically, the compositions of the present invention are readily and effectively delivered to organic substrates, such as foliage, crops and weeds. The unique formulation enables microcapsules containing a biologically active ingredient to adhere to these organic materials without unduly coating the substrate and unintentionally interfering with their life processes. Similarly, compositions of the present invention can readily be applied to skin and hair of non-human as well as human subjects in need of treatment. Further, the present compositions can be applied to non-organic substrates, such as buildings, pavements, ground and the like in an efficient and effective manner with excellent retention of the active ingredient to the intended substrate.

Surprisingly, it has been found that an aqueous suspension of microcapsules and adhesive microspheres material may economically be applied to an intended substrate through a spray device in the form of an aerosol. This method of application may advantageously be employed for microcapsules containing any fill material, but is particularly desirable for microcapsules that contain a biologically active material. In such cases, the intended substrate is preferably foliage, crops or weeds. The adhesive material is an aqueous suspension of adhesive microspheres. Such microspheres surprisingly provide excellent adhesion to the intended substrate and do not coat the microcapsules or inhibit release of the encapsulated contents thereof.

The invention is illustrated in the following examples.

### Example 1

An aqueous suspension of adhesive microspheres (20g, as described in U.S. Pat. No. 5,508,313, example 2 having a ratio of IOA:AA:Carbowax of 97:2:1) was neutralized with NH₄OH (8g in 20g water). An aqueous suspension of microcapsules of a pheromone, E-11-tetradecen-1-yl acetate encapsulated in a polyurea shell (50g) and rhamsam gum suspending agent were added, with stirring. A good suspension of adherent microcapsules was obtained.

In a comparative test, adhesive microspheres (20g as described above) were mixed with 20g water. An aqueous suspension of microcapsules of E-11-tetradecen-1-yl acetate in a polyurea shell (50g) and a rhamsun gum suspending agent was added, with agitation. The components coagulated and, despite dilution with a further 80g of water there was obtained a useless coagulum.

## Claims

1. An aqueous suspension of microcapsules containing a biologically active material, which suspension further comprises an adhesive material in an amount effective to enable said microcapsules to adhere to an intended substrate, wherein the adhesive material is in the form of an aqueous suspension of adhesive microspheres.

2. A suspension as claimed in claim 1 wherein the adhesive microspheres are acrylate- or methacrylate- based infusible, solvent dispersible, solvent insoluble inherently tacky, elastomeric copolymeric microspheres.

3. A suspension as claimed in claim 1 wherein the adhesive microspheres are hollow.

4. A suspension as claimed in claim 1 wherein the biologically active material is a pharmaceutical.

5. A suspension as claimed in claim 1 wherein the biologically active material is selected from the group consisting of fungicides and bactericides.

6. A suspension as claimed in claim 1 wherein the biologically active material is a pesticide.

7. A suspension as claimed in claim 1 wherein the biologically active material is selected from the group consisting of herbicides and insecticides.

8. A suspension as claimed in claim 1 wherein the biologically active material is selected from the group consisting of pyrethroids and pheromones.

9. A suspension as claimed in claim 1 wherein the microcapsules are composed of an encapsulated biologically active material in a shell selected from the group consisting of polyurea, polyurethane, melamine/urea and gelatin.

10. A suspension as claimed in claim 1 wherein the microcapsules are provided in a size in the range of from 1 micron to 2 mm.

11. A process for preparing an aqueous suspension of microcapsules and adhesive microspheres, which process comprises admixing an aqueous suspension A) of microcapsules having a pH greater than about 7 with an aqueous suspension B) of adhesive microspheres having a pH greater than about 7.

12. A process according to claim 11 wherein aqueous ammonia is used to provide the pH greater than about 7.

13. A process according to claim 11 wherein the pH is between about 8 and about 9.

14. A process for preparing an aqueous suspension of microcapsules and adhesive microspheres, which process comprises admixing an aqueous suspension A) of microcapsules having a pH less than about 7 with an aqueous suspension B) of adhesive microspheres having a pH less than about 7.

15. A process according to claim 11, wherein the aqueous suspension B) of adhesive microspheres contains from about 5 to 60 percent of the adhesive by weight before mixing with the microcapsule suspension A).

16. A process according to claim 11, wherein the aqueous suspension B) of adhesive microspheres contains from about 25 to 40 percent of the adhesive by weight before mixing with the microcapsule suspension A).

17. A process according to claim 11, wherein about 10 to 30 parts by weight of aqueous suspension B) of adhesive microspheres is added to about 90 to 70 parts by weight of aqueous suspension A) of microcapsules.

18. A method for applying microcapsules to an intended substrate, comprising .
a) preparing an aqueous suspension of microcapsules, which suspension further comprises a suspension of adhesive microspheres in an amount effective to enable said microcapsules to adhere to an intended substrate,
b) delivering said suspension to an intended substrate in through a spray device in the form of an aerosol.

19. The method of claim 18, wherein the intended substrate is selected from the group consisting of foliage, crops and weeds.

## Patentansprüche

1. Wässrige Suspension von ein biologisch aktives Material enthaltenden Mikrokapseln, wobei die Suspension ferner einen Klebstoff in einer Menge umfasst, die wirksam ist, um die Haftung der Mikrokapseln an einem vorgesehenen Substrat zu ermöglichen, wobei der Klebstoff in Form einer wässrigen Suspension von Klebstoff-Mikrokügelchen vorliegt.

2. Suspension nach Anspruch 1, wobei die Klebstoff-Mikrokügelchen unschmelzbare, in Lösungsmittel dispergierbare, Lösungsmittel-unlösliche inhärent klebrige, elastomere copolymere Mikrokügelchen auf der Basis von Acrylat oder Methacrylat sind.

3. Suspension nach Anspruch 1, wobei die Klebstoff-Mikrokügelchen hohl sind.

4. Suspension nach Anspruch 1, wobei das biologisch aktive Material ein Arzneimittel ist.

5. Suspension nach Anspruch 1, wobei das biologisch aktive Material ausgewählt ist aus Fungiziden und Bakteriziden.

6. Suspension nach Anspruch 1, wobei das biologisch aktive Material ein Pestizid ist.

7. Suspension nach Anspruch 1, wobei das biologisch aktive Material ausgewählt ist aus Herbiziden und Insektiziden.

8. Suspension nach Anspruch 1, wobei das biologisch aktive Material ausgewählt ist aus Pyrethroiden und Pheromonen.

9. Suspension nach Anspruch 1, wobei die Mikrokapseln aus einem in einer Hülle, ausgewählt aus Polyharnstoff, Polyurethan, Melanin/Harnstoff und Gelatine, eingekapselten biologisch aktiven Material bestehen.

10. Suspension nach Anspruch 1, wobei die Mikrokapseln in einer Größe im Bereich von 1 µm bis 2 mm bereitgestellt werden.

11. Verfahren zur Herstellung einer wässrigen Suspension von Mikrokapseln und Klebstoff-Mikrokügelchen, wobei das Verfahren Vermischen einer wässrigen Suspension A) von Mikrokapseln, welche einen pH-Wert von größer als etwa 7 aufweist, mit einer wässrigen Suspension B) von Klebstoff-Mikrokügelchen, welche einen pH-Wert von größer als etwa 7 aufweist, umfasst.

12. Verfahren nach Anspruch 11, wobei wässrige Ammoniaklösung verwendet wird, um einen pH-Wert von größer als etwa 7 bereitzustellen.

13. Verfahren nach Anspruch 11, wobei der pH-Wert zwischen etwa 8 und etwa 9 liegt.

14. Verfahren zur Herstellung einer wässrigen Suspension von Mikrokapseln und Klebstoff-Mikrokügelchen, wobei das Verfahren Vermischen einer wässrigen Suspension A) von Mikrokapseln, welche einen pH-Wert von weniger als etwa 7 aufweist, mit einer wässrigen Suspension B) von Klebstoff-Mikrokügelchen, welche einen pH-Wert von weniger als etwa 7 aufweist, umfasst.

15. Verfahren nach Anspruch 11, wobei die wässrige Suspension B) von Klebstoff-Mikrokügelchen vor dem Mischen mit der Mikrokapsel-Suspension A) etwa 5 bis 60 Gew.-% des Klebstoffs enthält.

16. Verfahren nach Anspruch 11, wobei die wässrige Suspension B) von Klebstoff-Mikrokügelchen vor dem Mischen mit der Mikrokapsel-Suspension A) etwa 25 bis 40 Gew.-% des Klebstoffs enthält.

17. Verfahren nach Anspruch 11, wobei etwa 10 bis 30 Gewichtsteile der wässrigen Suspension B) von Klebstoff-Mikrokügelchen zu etwa 90 bis 70 Gewichtsteilen der wässrigen Suspension A) von Mikrokapseln zugegeben werden.

18. Verfahren zum Aufbringen von Mikrokapseln auf ein vorgesehenes Substrat, umfassend
a) Herstellen einer wässrigen Suspension von Mikrokapseln, wobei die Suspension ferner eine Suspension von Klebstoff-Mikrokügelchen in einer Menge umfasst, die wirksam ist, um die Haftung der Mikrokapseln an einem vorgesehenen Substrat zu ermöglichen,
b) Zuführen der Suspension zu einem vorgesehen Substrat durch eine Sprühvorrichtung in Form eines Aerosols.

19. Verfahren nach Anspruch 18, wobei das vorgesehene Substrat ausgewählt ist aus Laub, Getreide und Unkraut.

## Revendications

1. Suspension aqueuse de microcapsules contenant une substance biologiquement active, laquelle suspension comprend en outre un matériau adhésif en une quantité efficace pour permettre auxdites microcapsules d'adhérer à un substrat voulu, dans laquelle le matériau adhésif est sous la forme d'une suspension aqueuse de microsphères adhésives.

2. Suspension selon la revendication 1, dans laquelle les microsphères adhésives sont des microsphères copolymères élastomères à base d'acrylate ou de méthacrylate infusibles, dispersibles dans un solvant, ayant du collant en soi insoluble dans un solvant.

3. Suspension selon la revendication 1, dans laquelle les microsphères adhésives sont creuses.

4. Suspension selon la revendication 1, dans laquelle la substance biologiquement active est un produit pharmaceutique.

5. Suspension selon la revendication 1, dans laquelle la substance biologiquement active est choisie dans le groupe constitué des fongicides et des bactéricides.

6. Suspension selon la revendication 1, dans laquelle la substance biologiquement active est un pesticide.

7. Suspension selon la revendication 1, dans laquelle la substance biologiquement active est choisie dans le groupe constitué des herbicides et des insecticides.

8. Suspension selon la revendication 1, dans laquelle la substance biologiquement active est choisie dans le groupe constitué des pyréthroïdes et des phéromones.

9. Suspension selon la revendication 1, dans laquelle les microcapsules sont composées d'une substance biologiquement active encapsulée dans une coque du groupe constitué par la polyurée, le polyuréthane, la mélamine/urée et la gélatine.

10. Suspension selon la revendication 1, dans laquelle les microcapsules sont fournies dans une taille dans la plage de 1 micron à 2 mm.

11. Procédé de préparation d'une suspension aqueuse de microcapsules et de microsphères adhésives, lequel procédé comprend le mélange d'une suspension aqueuse A) de microcapsules ayant un pH supérieur à environ 7 avec une suspension aqueuse B) de microsphères adhésives ayant un pH supérieur à environ 7.

12. Procédé selon la revendication 11, dans lequel de l'ammoniaque aqueux est utilisée pour fournir le pH supérieur à environ 7.

13. Procédé selon la revendication 11, dans le quel le pH est entre environ 8 et environ 9.

14. Procédé de préparation d'une suspension aqueuse de microcapsules et de microsphères adhésives, lequel procédé comprend le mélange d'une suspension aqueuse A) de microcapsules ayant un pH inférieur à environ 7 avec une suspension aqueuse B) de microsphères adhésives ayant un pH inférieur à environ 7.

15. Procédé selon la revendication 11, dans lequel la suspension aqueuse B) de microsphères adhésives contient d'environ 5 à 60 pour cent de l'adhésif en poids avant le mélange avec la suspension de microcapsules A).

16. Procédé selon la revendication 11, dans lequel la suspension aqueuse B) de microsphères adhésives contient d'environ 25 à 40 pour cent de l'adhésif en poids avant le mélange avec la suspension de microcapsules A).

17. Procédé selon la revendication 11, dans lequel environ 10 à 30 parties en poids de suspension aqueuse B) de microsphères adhésives est ajouté à environ 90 à 70 parties en poids de suspension aqueuse A) de microcapsules.

18. Procédé d'application de microcapsules à un substrat voulu, comprenant
a) la préparation d'une suspension aqueuse de microcapsules, laquelle suspension comprend en outre une suspension de microsphères adhésives en une quantité efficace pour permettre auxdites microcapsules d'adhérer à un substrat voulu,
b) la délivrance de la dite suspension à un substrat voulu par un dispositif de vaporisation sous la forme d'un aérosol.

19. Procédé selon la revendication 18, dans lequel le substrat voulu est choisi dans le groupe constitué par le feuillage, les produits agricoles, et les mauvaises herbes.
